# DEMANDE DE BREVET EUROPEEN

(11) **EP 1 086 618 A1**
(43) Date de publication de la demande: **28.03.2001**
(21) Numéro de dépôt: 00490037.9
(22) Date de dépôt: 22.09.2000
(51) Int. Cl.: A01D 19/16, A01D 33/08

(54) **Dispositif pour diminuer la tare-terre de produits agricoles, notamment betteraves et machine d'arrachage equipee d'un tel dispositif**

(30) Priorité: 24.09.1999 FR 9912178
(71) Demandeur: Batteux, 02120 Monceau sur Oise (FR)
(72) Inventeur: Batteux, Jean-Claude, 02120 Monceau Sur Oise (FR); Batteux, David, 02120 Monceau Sur Oise (FR)
(74) Mandataire: Hénnion, Jean-Claude

(57) **Abrégé**

Le dispositif pour diminuer la tare-terre de produits agricoles, notamment de betteraves, équipe une machine qui comprend un support mobile, se déplaçant dans une direction déterminée et sur lequel les produits et la terre son alimentés. Il comprend au moins un élément rotatif (1) de projection, dont l'axe de rotation (DD') est perpendiculaire au support et animé d'une vitesse d'au moins 300t/mn. Cet élément de projection (1) est disposé au-dessus du support en sorte d'être sur le trajet des produits et de la terre lorsque ceux-ci se déplacent Sur ledit support ; de préférence il comporte au moins un barreau rigide (3) monté à distance de l'axe de rotation (DD'). Par exemple l'élément de projection se présente sous la forme (1) d'un moulinet comportant n barreaux (3) qui sont montés sur le pourtour d'un cadre rotatif (2) et ont tous la même disposition par rapport à l'axe de rotation (DD') dudit cadre.

## Description

La présente invention concerne le déterrage de produits agricoles, notamment de betteraves. Elle concerne plus particulièrement un dispositif spécialement conçu pour diminuer la tare-terre sur une machine d'arrachage ou sur une machine de déterrage.

Les betteraves sucrières sont cultivées généralement par des exploitants agricoles, puis après arrachage sont transportées sur des zones de transformation, notamment pour en extraire le sucre. Lors de la remise au transformateur des betteraves, il subsiste une certaine quantité de terre et éventuellement de déchets végétaux qui sont des éléments gênants que le transformateur doit préalablement éliminer avant d'effectuer les opérations de transformation proprement dites.

On désigne sous le terme tare-terre la quantité de terre qui est livrée au transformateur, comparativement au poids de betteraves. La tare-terre est calculée par prélèvement des lots entrant chez le transformateur, par différence entre le poids brut entrant et le poids des betteraves après lavage. La tare-terre peut varier dans de très grandes proportions, en fonction de la nature des sols et des conditions climatiques, pour un même matériel d'arrachage. Elle peut prendre des proportions très importantes, jusqu'à 60%.

En elle-même, la présence de terre sur les betteraves livrées au transformateur est un inconvénient ; mais plus la tare-terre est élevée et plus cet inconvénient s'avère préjudiciable. Le premier inconvénient est l'appauvrissement du sol d'exploitation, dans la mesure où la terre qui est emportée par les betteraves est une terre riche. Le second inconvénient est le coût du transport, les camions transportant non seulement les betteraves mais également la terre. Le troisième inconvénient est le coût d'élimination de la terre par le transformateur, qui comprend les opérations de lavage, le stockage de boues de lavage, le transport des boues et leur épandage.

Pour inciter les exploitants agricoles à diminuer la tare-terre, certains transformateurs vont même jusqu'à imposer des modalités financières en termes de sanctions lorsque la tare-terre est supérieure à un seuil donné et sous forme de primes lorsque la tare-terre est inférieure à ce seuil.

Une première solution qui a été envisagée pour diminuer la tare-terre est de créer des installations de déterrage, c'est-à-dire des installations indépendantes où les betteraves, après stockage en silos, sont reprises pour éliminer le maximum de terre qui adhère à leur surface. Effectivement, un stockage plus ou moins prolongé, avec séchage de la terre, permet une élimination partielle plus facile de la terre. Cependant, cette technique ne résout pas tous les inconvénients précités, notamment celui de l'appauvrissement du sol et du transport. De plus, elle génère un coût complémentaire. Ce problème du déterrage n'est pas exclusif aux betteraves, mais peut également se rencontrer pour d'autres productions telles que les pommes de terre, les chicorées ou les endives.

Le but que s'est fixé le demandeur est de proposer un dispositif susceptible de diminuer la quantité de terre emportée par les produits agricoles, notamment les betteraves, sur une machine d'arrachage ou de déterrage, laquelle machine comprend de manière connue un support mobile, se déplaçant dans une direction F déterminée, sur lequel les produits et la terre préalablement ramassés sont alimentés et se déplacent et au moins un élément rotatif, dont l'axe de rotation est perpendiculaire audit support et qui est disposé au-dessus du support de façon à être sur le trajet des produits et de la terre lorsque ceux-ci se déplacent sur ledit support.

De manière caractéristique, l'élément rotatif est un élément de projection, animé d'une vitesse d'au moins 3OOt/mn , et son axe de rotation est à proximité de la périphérie extérieure du support mobile.

Ainsi lors du déplacement du produit sur le support, ce produit vient heurter l'élément de projection et, du fait de la vitesse élevée de rotation de celui-ci, cet impact projette le produit sur le support vers la zone médiane de celui-ci, le déviant de son trajet naturel. C'est cet impact qui a pour effet de détacher au moins une partie de la terre et de remettre le produit en circulation sur le support mobile sans risque d'accumulation.

Dans les documents FR.86787 et GB.166,125 on a proposé une machine du type précité comportant un élément rotatif de nettoyage des betteraves ou pommes de terre qui est placé au-dessus d'un support rotatif du type soleil ou turbine. Mais dans ces documents,aucune indication de vitesse de rotation ne permet de suggérer une fonction de projection impartie à cet élément. Par ailleurs l'élément rotatif et le support rotatif ont le même axe de rotation, ce qui entraîne les produits vers la périphérie du support vers une grille latérale où ils risquent de s'accumuler.

Dans le document FR.2493O96 on a déjà proposé de placer dans un dispositif à deux soleils (disques à barreaux sensiblement radiaux) ramasseurs frontaux et un soleil arrière de récupération, un organe rotatif tournant en sens inverse du troisième soleil et placé dans la zone de chevauchement des soleils ramasseurs et du troisième soleil de récupération. Mais cet organe rotatif dont la vitesse de rotation n'est pas précisée a pour fonction d'empêcher le bourrage , c'est-à-dire de remettre en circulation les produits arrivant dans la zone de chevauchement et s'accumulant dans cette zone, fonction qui est obtenue avec une faible vitesse de rotation.

Dans le document GB.781,617, on a proposé pour le ramassage des pommes de terre d'utiliser un élément rotatif de projection, mais dans la machine en question cet élément est au-dessus du disque de ramassage et projette la terre et les pommes de terre hors du disque sur le sol, ce qui n'est pas dans le domaine technique de l'invention.

Selon un mode préféré de réalisation, le support mobile étant animé d'un mouvement rotatif dans un sens donné, l'élément rotatif de projection tourne dans le sens inverse du support mobile. De préférence le dispositif comporte des moyens de réglage du positionnement latéral de l'élément rotatif de projection par rapport à la périphérie du support.

De préférence, l'élément rotatif de projection se présente sous la forme d'un moulinet comportant n barreaux, lesdits barreaux étant montés sur le pourtour d'un cadre rotatif et ayant tous la même disposition par rapport à l'axe de rotation dudit cadre.

Cette disposition, le nombre de barreaux, et la vitesse de rotation du moulinet sont fonction du type de produit agricole concerné et également du type de sol, de son humidité et de l'emplacement du moulinet dans la chaîne cinématique de la machine agricole sur laquelle le dispositif est monté.

S'agissant par exemple de betteraves, le nombre n de barreaux est de préférence compris entre 4 et 12.

Selon une première variante d'un moulinet droit, les barreaux sont parallèles à l'axe de rotation.

Selon une seconde variante d'un moulinet conique, tous les barreaux sont inclinés par rapport à l'axe de rotation de manière convergente selon un point situé soit au-dessus soit au-dessous du moulinet.

Selon une troisième variante d'un moulinet en spirale, tous les barreaux sont inclinés latéralement par rapport à l'axe de rotation.

Selon une quatrième variante, semi-conique, tous les barreaux sont, en partie haute, inclinés de manière convergente selon un point situé vers le haut du moulinet et, en partie basse, parallèles à l'axe de rotation.

Selon une cinquième variante, d'un moulinet à double conicité, tous les barreaux sont inclinés de manière convergente, en partie haute vers un point situé vers le bas du moulinet et en partie basse vers un point situé vers le haut du moulinet.

Dans les quatrième et cinquième variantes, la partie basse représente sensiblement le tiers de la hauteur totale du moulinet.

La machine agricole peut être alimentée non seulement par les produits et la terre qui adhère sur lesdits produits mais également par des corps étrangers, notamment des cailloux. Compte tenu de la vitesse élevée de rotation du moulinet, la présence de cailloux peut entraîner une détérioration des barreaux allant jusqu'à la rupture. Pour pallier cet inconvénient, les barreaux sont fixés uniquement en partie supérieure sur le cadre rotatif. Du fait que ce sont les parties inférieures libres qui viennent en contact avec les cailloux, il y a une certaine flexibilité desdites parties inférieures par rapport aux zones de fixation sur le cadre rotatif. Cette flexibilité permet d'encaisser les forces mises en oeuvre lors de l'impact avec le caillou et évite la détérioration du barreau.

Selon un mode préféré de réalisation, le cadre rotatif est constitué par deux platines sur le pourtour desquelles sont fixés les barreaux ; à savoir : une platine supérieure sur laquelle est monté également l'arbre de transmission de la rotation et une seconde platine ayant un évidement central. Cet évidement est prévu pour éviter l'accumulation de terre qui pourrait se produire à l'intérieur de la cage formée par les deux platines et les barreaux périphériques.

La vitesse de rotation de l'élément rotatif de projection est de préférence réglable dans une fourchette de 300 à 1 000 t/mn.

L'élément rotatif de projection est placé au-dessus du support sur lequel se déplacent les produits. De préférence, cet élément rotatif est placé à une distance e de l'ordre de 30 à 50 mm au-dessus dudit support, ce qui permet à la terre qui est dissociée du produit lors de l'impact sur l'élément rotatif de projection d'être évacuée sans contraintes par le support lors du déplacement de celui-ci.

Le dispositif de l'invention peut être monté sur tout type de machine agricole. Il peut l'être par exemple sur une machine spécifique de déterrage. Cependant, sa vocation première et son intérêt principal consistent dans son montage sur une machine d'arrachage.

C'est un autre objet de l'invention que de revendiquer une machine d'arrachage qui comporte :
a) des moyens d'arrachage des produits du sol,
b) des moyens de relevage et de dépose des produits,
c) au moins un support mobile de transport, apte à transporter les produits déposés par les moyens de relevage et de dépose vers des moyens de récupération desdits produits,
d) éventuellement des grilles latérales de maintien et de nettoyage des produits sur les turbines.

De manière caractéristique, la machine d'arrachage comporte au moins un élément rotatif de projection tel que défini ci-dessus, disposé au-dessus du support mobile de transport, à proximité de la périphérie extérieure de celui-ci.

Selon une configuration particulière, la machine comporte au moins deux turbines de transport, montées de front sur la machine et des grilles latérales de maintien des produits sur les turbines ; dans ce cas, l'élément rotatif de projection est de préférence un moulinet déterreur monté au-dessus de chaque turbine, à proximité de la périphérie extérieure de celles-ci, en remplacement d'une partie d'une grille latérale de maintien.

Dans le fonctionnement habituel de la machine d'arrachage à turbines, les produits, notamment les betteraves, qui ont été arrachés sont soulevés et déposés sur les deux premières turbines, ce qui permet de couvrir une largeur d'arrachage importante. Les betteraves qui sont déposées sur la turbine tournent dans le même sens et viennent se heurter sur les grilles latérales de maintien, ce qui fait tomber une faible partie de terre, selon la technique connue. Les betteraves transportées sur les deux premières turbines sont généralement collectées par une troisième turbine arrière et dirigées vers les moyens de récupération. Selon l'invention, le moulinet déterreur équipant chacune des turbines est décalé angulairement de 40 à 180° par rapport à la direction longitudinale de la machine, dans le sens de rotation de la turbine. Cette disposition particulière permet que la projection due à l'impact sur le moulinet déterreur se fasse dans le sens de transport des produits sur chaque turbine, cette projection intervenant vers l'axe de rotation de la turbine.

La présente invention sera mieux comprise à la lecture de la description qui va être faite d'exemples de réalisation d'un moulinet déterreur et d'une machine d'arrachage pour betteraves, illustrés par le dessin annexé dans lequel :
- la figure 1 est une vue en perspective d'un moulinet déterreur droit,
- la figure 2 est une vue schématique en coupe d'un moulinet déterreur conique,
- la figure 3 est une vue schématique partielle de côté d'un moulinet déterreur à spirales avec prolongement coudé et,
- la figure 4 est une vue très schématique de dessus d'une machine agricole d'arrachage,
- la figure 5 est une vue schématique en coupe d'un moulinet déterreur à double conicité.

Pour diminuer la tare-terre, le principe qui est à la base de l'invention est de soumettre le produit agricole sur lequel adhère la terre à un choc sur un élément rotatif de projection tournant à une vitesse importante, d'au moins 300 t/mn disposé au-dessus du support sur lequel se déplace le produit de telle sorte que le produit soit projeté sur le support sans risque d'accumulation.

La description qui va suivre concerne la variante préférée, mais non exclusive de réalisation de cet élément rotatif de projection, spécialement conçu pour le déterrage des betteraves.

Dans cette variante, le dispositif de l'invention se présente sous la forme d'un moulinet déterreur 1, comportant un cadre rotatif 2 sur le pourtour duquel sont fixés des barreaux rigides 3. Le cadre rotatif 2 est constitué de deux platines circulaires 4, 5. Les extrémités supérieures 3a des barreaux 3 sont fixées, notamment par soudure, sur le chant 4a de la platine supérieure 4. Cette platine supérieure 4 est percée d'un trou 6 central destiné à servir de logement à l'arbre de transmission réalisant la rotation du moulinet 1, selon son axe de rotation DD'.

Les barreaux 3 sont également fixés par soudure sur le chant 5a de la seconde platine 5, celle-ci étant disposée à distance de la platine supérieure 4 de sorte que les barreaux 3 soient fixés au cadre 2 uniquement dans leur portion supérieure, laissant libre une portion inférieure 3b de longueur importante, de préférence de 100 à 200 mm. La présence de cette portion inférieure libre 3b permet que chaque barreau présente une certaine flexibilité par rapport au cadre rotatif 2 sur lequel il est fixé. Cette flexibilité permet d'encaisser les chocs dus à l'impact des cailloux et donc d'éviter la détérioration voire la rupture des barreaux 3 lors de ces impacts.

La seconde platine 5 a une configuration annulaire, avec un évidement central 7. Dans le cas contraire, c'est-à-dire dans le cas où ladite platine 5 serait une plaque circulaire pleine, il y aurait accumulation de terre entre les deux platines. Au contraire, lors de l'impact d'une betterave sur un barreau 3, la terre qui est séparée de ladite betterave et qui est projetée vers l'intérieur du moulinet 1 peut retomber vers le support en passant à travers l'évidement 7.

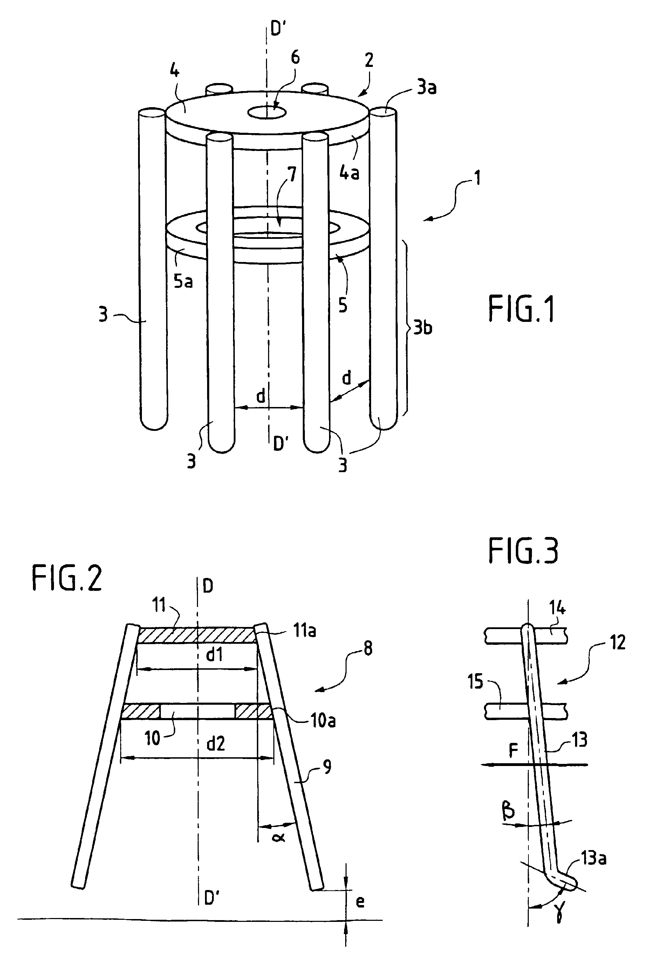

Sur la figure 1, on a représenté un moulinet 1 équipé de six barreaux 3 disposés régulièrement sur le pourtour des platines circulaires 4, 5. L'intervalle d entre chaque barreau est déterminé en fonction de la taille des produits à déterrer. S'agissant de betteraves, qui ont une configuration globale conique, les dimensions moyennes à prendre en compte, lorsqu'elles sont arrachées, sont de l'ordre de 10 à 12 cm pour ce qui est du diamètre du cône et de l'ordre de 20 à 22 cm pour ce qui est de la hauteur. Bien sûr, l'intervalle d doit être supérieur à la plus petite dimension.

Dans un exemple précis mais non limitatif de réalisation d'un moulinet droit tel qu'illustré à la figure 1, la longueur totale des barreaux 3 était de 270 mm environ, leur diamètre de 20 mm environ, la longueur de la portion inférieure 3b de 150 mm environ et le diamètre des platines 4, 5 de 130 mm environ.

Il est possible de donner au moulinet d'autres configurations. Deux exemples ont été illustrés aux figures 2 et 3.

Le moulinet 8 de la figure 2 est conique, avec les barreaux 9 qui ont une inclinaison d'angle α par rapport à l'axe DD' de rotation. Tous les barreaux 9 convergent vers un point de l'axe de rotation qui est situé au-dessus du moulinet 8. Pour obtenir cette inclinaison, on a choisi deux platines 10, 11 ayant des diamètres D1, D2 différents, le diamètre D2 de la platine inférieure 10 étant plus grand que le diamètre D1 de la platine supérieure 11. Eventuellement, pour faciliter la fixation par soudure des barreaux 9 sur les chants 10a et 11a des deux platines 10, 11, lesdits chants 10a et 11a sont en biseau, dans le sens de l'inclinaison d'angle α.

Le moulinet 12 de la figure 3 est dit en spirales. Les barreaux 13 ne sont pas dans le même plan que l'axe de rotation DD' mais sont inclinés latéralement selon un angle β. Dans ce cas, les deux platines 14, 15 ont le même diamètre ou éventuellement un diamètre différent comme dans l'exemple précédent. Avantageusement, le barreau 13 présente une extrémité inférieure coudée 13a, cette extrémité 13a faisant un angle γ avec l'axe de rotation DD', γ étant supérieur à l'angle d'inclinaison β. Sur la figure 3, on a représenté par la flèche F le sens de rotation du moulinet 12. Les inclinaisons β et γ sont dans le sens de la rotation F.

L'extrémité coudée 13a permet de diminuer l'agressivité du bord inférieur du barreau lors de l'impact de la betterave sur celui-ci.

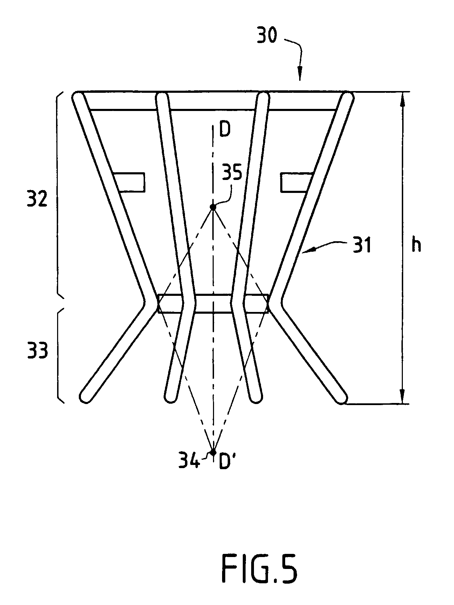

Le moulinet 3O de la figure 5 est à double conicité. Chaque barreau 31 a en partie haute 32 une direction inclinée par rapport à l'axe de rotation DD', direction convergente vers un point 34 situé vers le bas du moulinet et a en partie basse 33 une direction inclinée inverse qui est convergente vers un point 35 situé vers le haut du moulinet. La partie basse 33 correspond sensiblement au tiers de hauteur totale h du moulinet 3O.

Dans une autre variante , en partie basse 33, les barreaux sont parallèles à l'axe de rotation DD'.

Les configurations qui viennent d'être décrites du type conique ou à spirales, sont destinées à diminuer l'agressivité du moulinet à l'encontre des betteraves.

Ils sont destinés à équiper une machine agricole qui comprend un support mobile, se déplaçant dans une direction déterminée et sur lequel les produits, notamment les betteraves sont alimentées.

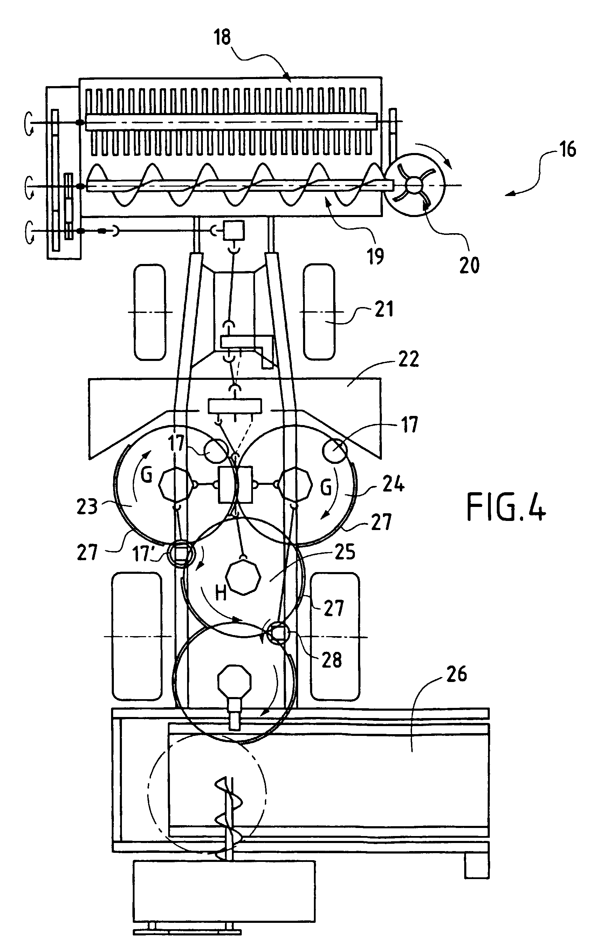

Sur la figure 4, on a représenté schématiquement la structure d'une machine d'arrachage auto-tractée 16 équipée de trois moulinets déterreurs 17, 17'

Cette machine 16 comporte, de manière frontale, des moyens conventionnels d'arrachage et de traitement des betteraves, avec un broyeur 18 des feuilles, une vis 19 d'extraction des betteraves et un dispositif éparpilleur 20. Derrière les roues avant 21, la machine 16 comporte une plaque 22 apte à prélever du sol, relever les betteraves et les amener sur deux turbines 23, 24 disposées de front, de manière adjacente, et tournant toutes les deux dans le même sens selon la flèche G. Une troisième turbine 25 est disposée de manière centrale à l'arrière et se chevauchant légèrement avec les deux premières 23, 24. Bien sûr le plan de la troisième turbine 25 est à une hauteur légèrement inférieure à celle des deux premières turbines 23, 24. Cette troisième turbine 25 tourne en sens inverse des deux premières, selon la flèche H. Sur la figure 4 ont été représentés d'autres turbines faisant suite à la troisième 25 et transportant les betteraves jusqu'aux moyens de récupération, représentés par un tapis transporteur 26.

Chaque turbine, dénommée également « soleil », est un plateau tournant, qui est dit ouvert, c'est-à-dire qui présente des zones évidées permettant à la terre de s'échapper et de retomber sur le sol. Traditionnellement, ces turbines sont constituées par pliage de tubes donnant globalement cette configuration circulaire, les betteraves reposant sur les tubes en question tandis que la terre, les cailloux et autres déchets peuvent retomber sur le sol en passant dans les zones évidées entre les tubes.

Au-dessus et selon le pourtour de chaque turbine sont prévues des grilles latérales 27 de maintien et de nettoyage des betteraves.

Chacune des trois turbines 23, 24, 25 est équipée d'un moulinet déterreur 17, selon l'une des variantes décrites précédemment. Ces moulinets déterreurs 17 sont disposés au-dessus de la turbine correspondante avec les bords inférieurs des barreaux qui sont à une distance e de l'ordre de 30 à 50 mm du plan de la turbine 23, 24, 25.

Les trois moulinets 17 ont leur axe de rotation qui se trouve à proximité immédiate de la périphérie de chaque turbine, (au-dessus ou à l'extérieur de ladite turbine) , en remplacement d'une partie d'une grille latérale , dans une zone qui est décalée angulairement dans le sens de rotation de la turbine correspondant par rapport à la direction longitudinale de la machine 16 d'un angle qui est compris entre 40 et 180°.

Dans l'exemple illustré, le décalage pour les deux premières turbines frontales 23, 24 était de l'ordre de 45°, tandis que le décalage pour la troisième turbine 25 était de l'ordre de 70°.

En fonctionnement, le trajet pris par les betteraves est le suivant. Lors du déplacement de la machine 18, dans la direction longitudinale de celle-ci, les betteraves arrachées et dépouillées de leurs feuilles sont relevées par la plaque 22 et déposées avec la terre sur les deux turbines frontales 23, 24. En pratique, pour ne pas abîmer les racines des betteraves, la machine découpe la bande de terre, ou route, dans laquelle les betteraves ont poussé. C'est donc un mélange de terre et de betteraves qui est déposé sur les deux premières turbines frontales 23, 24. Du fait de la rotation des deux dites turbines 23, 24, à une vitesse nettement supérieure à celle de déplacement de la machine 16, par exemple de l'ordre de 50 t/mn, chaque betterave qui est déposée sur une turbine donnée 23, 24 est déplacée avec ladite turbine dans le sens de la flèche G et, sur son trajet, vient heurter, avec la terre, la surface de frappe du moulinet 17, c'est-à-dire dans l'exemple retenu au moins l'un des barreaux rigides montés rotatifs sur ledit moulinet 17. Compte tenu de la vitesse élevée de rotation du moulinet 17, à savoir de 300 à 1000 t/mn, le choc provoqué par la frappe du barreau lors de sa rotation entraîne la dislocation partielle de la terre. De plus, la betterave est projetée vers le moyeu de la turbine avant de revenir, sous l'effet de la force centrifuge, de nouveau vers l'extérieur de la turbine et de heurter les grilles 27 latérales.

Il y a donc un effet cumulé qui augmente l'élimination de la terre, à savoir l'effet de choc du moulinet déterreur 17 d'une part et l'effet de raclage sur la grille 24 d'autre part. La terre disloquée tombe sur le sol à travers les évidements des turbines et des grilles latérales.

Les betteraves véhiculées sur les deux turbines frontales 23, 24 sont collectées par la troisième turbine arrière 25 qui tourne dans le sens opposé H. Toutes ces betteraves viennent heurter également le troisième moulinet 17' qui vient compléter l'action des deux premiers 17.

La vitesse de rotation de chaque moulinet est modulable grâce à un variateur de vitesse, en fonction des conditions opératoires et en particulier du type de sol et de son humidité. Il est en tout cas préférable d'éliminer le plus rapidement possible la terre qui adhère sur la betterave, faute de quoi les frottements successifs de la betterave sur les différentes pièces des turbines et des grilles latérales formeront une sorte de gangue extérieure difficile à éliminer. C'est pourquoi la vitesse de rotation la plus importante est généralement impartie aux deux moulinets 17 des deux premières turbines frontales 23, 24.

Traditionnellement, à l'emplacement du troisième moulinet 17', est prévu un cylindre tournant, ou tambour débourreur, ayant une surface extérieure pleine et tournant à la vitesse des turbines, c'est-à-dire une vitesse comprise entre 30 et 110 m/mn. Le but recherché est de faciliter le passage des betteraves d'une turbine à l'autre. Un tel cylindre tournant a été représenté sous la référence 28 sur la figure 4 entre la troisième et la quatrième turbine. Bien sûr, l'effet obtenu par ces cylindres tournants est totalement différent de celui qui est visé par le moulinet 17 de l'invention.

La présente invention n'est pas limitée au mode particulier de réalisation qui vient d'être décrit. En particulier le support mobile n'est pas nécessairement constitué de turbines rotatives. Par exemple le support mobile peut être constitué de rouleaux d'entraînement , notamment équipés de joncs en hélice permettant d'effectuer également un déplacement latéral des produits lors du transport , lesdits rouleaux étant disposés en amont d'autres organes de transport , notamment un ou plusieurs tapis. De manière caractéristique , au moins un élément rotatif de projection selon l'invention est placé dans la zone de jonction des rouleaux d'entraînement et des autres organes de transport.

S'agissant en particulier d'une machine destinée à l'arrachage des pommes de terre , machine qui comporte des socs arracheurs et des tapis de transport , de manière caractéristique selon l'invention au moins un élément rotatif de projection est placé en sortie des socs arracheurs ; de plus le sens de rotation de l'élément rotatif de projection est déterminé en sorte que les pommes de terre soient projetées sur un tapis de transport dans la direction de transport.

## Revendications

1. Dispositif pour diminuer la tare-terre de produits agricoles , notamment de betteraves , équipant une machine , laquelle comprend : un support mobile de transport sur lequel les produits et la terre sont alimentés, au moins un élément rotatif dont l'axe de rotation est perpendiculaire au support et qui est disposé au-dessus du support en sorte d'être sur le trajet des produits et de la terre lorsque ceux-ci se déplacent sur ledit support, caractérisé en ce que l'élément rotatif est un élément rotatif de projection animé d'une vitesse de rotation d'au moins 3OOt/mn, dont l'axe de rotation est à proximité de la périphérie extérieure du support mobile.

2. Dispositif selon la revendication 1 caractérisé en ce que le support mobile étant animé d'un mouvement rotatif dans un sens donné , l'élément rotatif de projection tourne dans le sens inverse du support mobile.

3. Dispositif selon l'une des revendications 1 ou 2 caractérisé en ce qu'il comporte des moyens de réglage du positionnement latéral de l'élément rotatif de projection par rapport à la périphérie du support.

4. Dispositif selon l'une des revendications 1 à 3 caractérisé en ce que l'élément rotatif de projection se présente sous la forme (1, 8, 12, 17) d'un moulinet comportant n barreaux (3, 9, 13), lesdits barreaux étant montés sur le pourtour d'un cadre rotatif et ayant tous la même disposition par rapport à l'axe de rotation (DD') dudit cadre.

5. Dispositif selon la revendication 4 caractérisé en ce que le nombre n de barreaux (3) est compris entre 4 et 12.

6. Dispositif selon l'une des revendications 4 et 5 caractérisé en ce que tous les barreaux (13) sont inclinés latéralement par rapport à l'axe de rotation (DD').

7. Dispositif selon l'une des revendications 4 ou 5 caractérisé en ce que tous les barreaux sont , en partie haute, inclinés de manière convergente selon un point situé vers le haut du moulinet et , en partie basse, parallèles à l'axe de rotation.

8. Dispositif selon l'une des revendications 4 ou 5 caractérisé en ce que tous les barreaux sont inclinés de manière convergente, en partie haute vers un point situé vers le bas du moulinet et en partie basse vers un point situé vers le haut du moulinet.

9. Dispositif selon l'une des revendications 7 ou 8 caractérisé en ce que la partie basse représente sensiblement le tiers de la hauteur totale du moulinet.

10. Dispositif selon l'une des revendications 4 à 9 caractérisé en ce que les barreaux sont fixés uniquement en partie supérieure sur le cadre rotatif.

11. Dispositif selon l'une des revendications 4 à 10 caractérisé en ce que le cadre rotatif (2) est constitué par deux platines (4, 5) sur le pourtour desquelles sont fixés les barreaux (3), à savoir une platine supérieure (4) sur laquelle est monté également l'arbre de transmission de la rotation et une seconde platine (5) ayant un évidement central (7).

12. Dispositif selon l'une des revendications 1 à 11 caractérisé en ce que la vitesse de rotation de l'élément rotatif de projection est réglable dans une fourchette de 300 à 1 000 t/mn.

13. Dispositif selon l'une des revendications 1 à 12 caractérisé en ce que l'élément rotatif est placé à une distance e de l'ordre de 30 à 50 mm au-dessus du support.

14. Machine d'arrachage qui comporte :
a) des moyens d'arrachage des produits du sol,
b) des moyens de relevage et de dépose des produits,
c) au moins un support de transport apte à transporter les produits déposés par les moyens de relevage et de dépose sur ledit support de transport vers dès moyens de récupération desdits produits,
caractérisée en ce qu'elle comporte au moins un élément rotatif de projection (17) selon l'une des revendications 1 à 12, disposé au-dessus du support de transport (23, 24, 25).

15. Machine d'arrachage selon la revendication 13 comportant au moins deux turbines de transport, montées de front sur la machine (16) et des grilles latérales de maintien des produits sur les turbines caractérisée en ce que l'élément rotatif de projection (17) est un moulinet déterreur, selon l'une des revendications 4 à 10, monté au-dessus de chaque turbine, à proximité de la périphérie extérieure de celle-ci, en remplacement d'une partie d'une grille latérale de maintien.

16. Machine selon la revendication 14 caractérisée en ce que le moulinet déterreur (17, 17') est décalé angulairement de 40° à 180° par rapport à la direction longitudinale de la machine, dans le sens de rotation de la turbine correspondante (23, 24, 25).

17. Machine selon la revendication 13 comportant comme support de transport des rouleaux d'entraînement disposés en amont d'autres organes de transport , caractérisée en ce qu'au moins un élément rotatif de projection est placé dans la zone de jonction des rouleaux d'entraînement et des autres organes de transport.

18. Machine selon la revendication 13 notamment pour les pommes de terre comportant des socs arracheurs et des tapis de transport, caractérisée en ce qu'au moins un élément rotatif de projection est placé en sortie des socs arracheurs et en ce que le sens de rotation de l'élément rotatif de projection est déterminé en sorte que les produits soient projetés sur un tapis de transport dans la direction de transport.
